Europäisches Patentamt

European Patent Office

Office européen des brevets

(19)

(11) Veröffentlichungsnummer: **0 124 745**
**B1**

(12) # EUROPÄISCHE PATENTSCHRIFT

(45) Veröffentlichungstag der Patentschrift:
09.08.89

(21) Anmeldenummer: 84103325.1

(22) Anmeldetag: 26.03.84

(51) Int. Cl.⁴: **H 01 M 4/68, H 01 M 4/74, H 01 M 4/84**

(54) **Negative Elektrode für Bleiakkumulatoren.**

(30) Priorität: 07.04.83 DE 3312550

(43) Veröffentlichungstag der Anmeldung:
14.11.84 Patentblatt 84/46

(45) Bekanntmachung des Hinweises auf die Patenterteilung: 09.08.89 Patentblatt 89/32

(84) Benannte Vertragsstaaten:
AT BE CH DE FR GB IT LI NL SE

(56) Entgegenhaltungen:
DE—A— 2 241 368
DE—A— 2 404 650
DE—A— 2 540 937
DE—B— 2 407 426
GB—A— 689 003
GB—A— 1 411 970
GB—A— 1 431 278
US—A— 4 299 259
Die Akte enthält technische Angaben, die nach dem
Eingang der Anmeldung eingereicht wurden und die
nicht in dieser Patentschrift enthalten sind.

(73) Patentinhaber: HAGEN Batterie AG
Thomästrasse 27/28
D-4770 Soest (DE)

(72) Erfinder: Kiessling, Reiner, Dr.
Am Dorfbach 16
D-4783 Anröchte 4 (DE)

(74) Vertreter: Dipl.-Phys.Dr. Manitz Dipl.-Ing., Dipl.-
Wirtsch. Finsterwald Dipl.-Ing. Grämkow Dipl.-
Chem.Dr. Heyn Dipl.-Phys. Rotermund
Morgan, B.Sc.(Phys.) Robert-Koch-Strasse 1
D-8000 München 22 (DE)

## Beschreibung

Die Erfindung betrifft eine negative Elektrode für Bleiakkumulatoren in Form einer aus Kupferstreckmetall betehenden rechteckigen Gitterplatte, die als Träger für die aktive Masse und zur Stromzu- bzw. -abführung dient, wobei die Streckrichtung des Streckmetalls parallel zu derjenigen Seite der rechteckigen Platte verläuft, an der die Anschlußfahne angeordnet ist, und wobei an der betreffenden Seite eine sich über die gesamte Länge erstreckende Bleileiste stromleitend befestigt ist, mit der die Anschlußfahne ein Stück bildet.

Bei einer bekannten negativen Elektrode dieser Art (DE-C-22 41 368) besteht das Problem, die die Anschlußfahne tragende Bleileiste einwandfrei mit der Gitterplatte zu verbinden, wobei insbesondere der Übergangsbereich von der massiven Bleileiste zum Streckmetall eine problematische Stelle darstellt, die nicht nur für einen einwandfreien Stromübergang von Bedeutung ist, sondern auch keiner Bruchgefahr ausgesetzt werden darf.

Weiter ist bereits eine mit Blei überzogene Kupferdrahtgeflecht-Elektrodenplatte für Akkumulatoren bekannt, an welche innerhalb einer geeigneten Form ein Bleirahmen angegossen ist (GB-A-689 003).

Weiter ist es bereits bekannt (GB-A-1 411 970) galvanische Verzinnung auf gedruckte Schaltungen aus Kupfer aufzubringen.

Die Aufgabe der vorliegenden Erfindung besteht darin, eine negative Elektrode der eingangs genannten Gattung zu schaffen, bei der eine einwandfreie, d. h. feste und gut stromleitende Verbindung zu der die Anschlußfahne tragenden Bleileiste vorhanden ist.

Zur Lösung dieser Aufgabe sieht die Erfindung vor, daß der die Bleileiste tragende Endbereich der Gitterplatte in die Ebene der Gitterplatte flachgedrückt und mit Blei umgossen ist. Auf diese Weise wird eine innige Verbindung zwischen dem gut stromleitenden Kupferstreckmetall und der Bleileiste erzielt, indem das Umgießen mit Blei erleichtert ist. Es wird so eine praktisch unlösbare mechanische Verbindung hergestellt.

Besonders vorteilhaft ist es, wenn die Unterkante der Bleileiste im wesentlichen durch die äußersten Kreuzungsstellen der Gitterplatte verläuft.

Eine besonders gute Verankerung des Kupferstreckmetalls in der Bleileiste wird erzielt, wenn die Gitterplatte an der Befestigungsseite geringfügig jenseits der Kreuzungsstellen abgeschnitten ist, derart, daß für das Umgießen mit dem Blei der Bleileiste kurze, über die Kreuzungsstellen hinausragende Verankerungsstege vorliegen. Hierdurch wird auch die Leitfähigkeit und der Stromübergang vom Streckmetall in die Leiste und umgekehrt begünstigt.

Eine besonders gute mechanische, gegen Biegekräfte in der Ebene der Platte unempfindliche Verbindung der Bleileiste mit der Gitterplatte kann weiter dadurch erzielt werden, daß auch diejenigen Felder an der Befestigungsseite, die an der Unterkante der Bleileiste ihre größte Breite haben, mit Blei ausgegossen sind. Auf diese Weise wird unmittelbar neben und parallel zu der eigentlichen Bleileiste praktisch eine zweite, mit V-förmigen Einschnitten versehene Bleileiste geschaffen, welche einwandfreie Kraftübertragungen von der Bleileiste auf die Gitterplatte bei allen denkbaren Belastungen gewährleistet.

Um das Gewicht der Elektrode wesentlich zu reduzieren, kennzeichnet sich eine weitere Ausführungsform der Erfindung dadurch, daß der von der Bleileiste abgewandte Endbereich der Gitterplatte eine Abschlußleiste aus säurefestem Kunststoff trägt und daß der vom Kunststoff umgebene Endbereich in die Ebene der Gitterplatte flachgedrückt ist. Hierdurch wird auch das Eindrücken in den Kunststoff erleichtert.

Hierbei ist vorzugsweise die Gitterplatte am unteren Ende in Höhe der Kreuzungsstellen abgeschnitten.

Zur Herstellung einer erfindungsgemäßen negativen Elektrode für Bleiakkumulatoren der vorstehend definierten Art wird zweckmäßigerweise ein Verfahren verwendet, bei welchem auf die Gitterplatte zunächst eine Blei-Zinn-Legierungsschicht und dann noch auf galvanischem Wege eine Bleischicht aufgebracht wird, wobei eine mindestens 8 % Sn aufweisende Blei-Zinn-Legierungsschicht nach Einhängen der Gitterplatte in ein Reinigungs- und Spülbad auf galvanischem Wege auf die Gitterplatte aufgebracht und anschließend ohne Zwischenspülung die Bleischicht aufgebracht wird.

Bevorzugt weist die Blei-Zinn-Legierungsschicht hierbei 10 % Sn auf.

Zur Herstellung einer negativen Elektrode, bei der die Gitterplatte am unteren Ende in Höhe der Kreuzungsstellen abgeschnitten ist, wird zweckmäßigerweise die Abschlußleiste vor dem Aufbringen der Blei-Zinnschicht und der Bleischicht auf die Gitterplatte angebracht.

Die Dicke der galvanisch aufgebrachten Blei-Zinnschicht soll mindestens 7 μm, vorzugsweise 10 μm betragen. Weiter ist es zweckmäßig, wenn die Dicke der galvanisch aufgebrachten Bleischicht mindestens 20 μm, vorzugsweise etwa 40 μm beträgt.

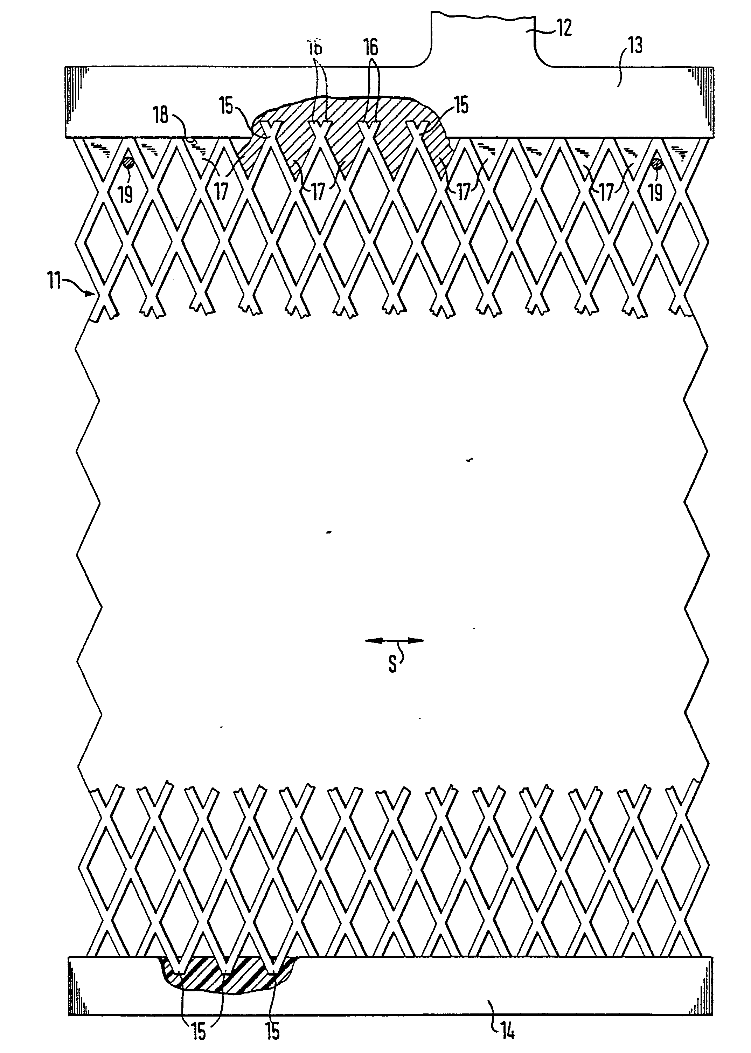

Die Erfindung wird im folgenden beispielsweise anhand der Zeichnung beschrieben, deren einzige Figur eine teilweise geschnittene Ansicht einer negativen Elektrode für Bleiakkumulatoren zeigt.

Nach der Zeichnung ist die aus Kupferstreckmetall bestehende Gitterplatte 11 parallel zur Streckrichtung S oben und unten abgeschnitten. Das Abschneiden am unteren Ende erfolgt im Bereich der Kreuzungsstellen 15. In diesem Bereich ist die Gitterplatte 11 etwa 5 mm tief in die Schmalseite einer rechteckigen Kunststoff-Abschlußleiste 14 hineingedrückt, und zwar derart, daß der Kunststoff den unteren schmalen Endbereich der Gitter-Platte 11 allseits dicht umschließt.

Am oberen Endbereich ist die Gitterplatte 11 oberhalb der Kreuzungsstellen derart abgeschnitten, daß über den Kreuzungsstellen 15 noch kurze Stege 16 verbleiben, welche in die die Anschlußfahne 12 tragende Bleileiste 13 eingebettet sind. Die Unterkante 18 der Bleileiste 13 verläuft im wesentlichen durch die Kreuzungsstellen 15.

Die Herstellung der erfindungsgemäßen negativen Elektrode geht wie folgt vor sich:

Zunächst wird das Kupferstreckmetall in der aus der Zeichnung ersichtlichen Weise in rechteckige Stücke geschnitten, wobei der Schnitt unten durch die Kreuzungsstellen 15 und oben etwas oberhalb der Kreuzungsstellen 15 vorgenommen wird. Darauf wird das Kupferstreckmetall im unteren Endbereich erhitzt und dann in die Schmalseite der thermoplastischen Kunststoff-Abschlußleiste 14 hineingestoßen. Von den breiten Seiten der Leiste aus wird dann mittels entsprechend ausgebildeter Platten ein Druck ausgeübt, derart, daß die in den Kunststoff eingestoßenen unteren Enden der Gitterplatte 11 allseits von Kunststoff umgeben werden. Anschließend wird das Kupferstreckmetall dann an schematisch angedeuteten Haken 19 an eine nicht dargestellte Stromzuführung angehängt. Zunächst wird das Kupferstreckmetall dann in ein Reinigungs- und Spülbad gehängt, um eine für die anschließende Galvanisierung geeignete Oberfläche zu schaffen.

Nach der Reinigung wird die Gitterplatte in ein Bleizinnbad eingehängt und an eine negative Spannung angelegt, sorauf sich auf der Oberfläche des Kupferstreckmetalls eine Blei-Zinnlegierung etwa im Verhältnis 90 : 10 niederschlägt. Der Strom bleibt solange eingeschaltet, bis sich auf dem Kupferstreckmetall eine Blei-Zinnschicht von mindestens 7 μm, vorzugsweise 10 μm niedergeschlagen hat.

Anschließend wird die Gitterplatte 11 mittels der Haken 19 aus dem Bad herausgehoben und ohne Zwischenspülung in ein Bleiionen enthaltendes weiteres galvanisches Bad eingehängt. Nunmehr wird erneut eine negative Spannung an die Gitterplatte 11 angelegt, worauf sich Blei auf der Oberfläche niederschlägt. Die Stromzufuhr wird fortgesetzt, bis die Stärke der Bleischicht mindestens 20 μm, vorzugsweise etwa 40 μm beträgt. Die Stromstärke beträgt 6 bis 10 A/dm², um eine moglichst rauhe, grobkristalline Oberfläche zu erhalten, die mit der später aufgebrachten negativen Masse einen guten elektrischen Kontakt bildet. Nunmehr ist die die Kunststoff-Abschlußleiste 14 tragende Gitterplatte 11 vorbereitet, um am oberen Ende die Bleileiste 13 anzugießen. Dies erfolgt in einer entsprechend ausgebildeten Form, welche jedoch an den Durchtrittsstellen der Stege 16 eine derartige Undichtigkeit aufweist, daß beim Eingießen des Bleis in die Form nicht nur die aus der Zeichnung ersichtliche Bleileiste 13 mit der Anschlußfahne 12 gegossen wird, sondern auch die Felder 17 mit flüssigem Blei ausgegossen werden. Hierdurch wird ein guter Kraftübergang von der Bleileiste 13 auf die Gitterplatte 11 während der Handhabung und auch im späteren Betrieb gewährleistet.

Beim Umgießen der Stege 16 mit Blei verbindet sich die auf dem Kupferstreckmetall vorhandene Bleischicht innig mit dem Bleimaterial der Leiste 13, so daß sowohl hinsichtlich der Festigkeit als auch bezüglich der Stromübertragung eine optimale Verbindung erzielt wird.

Vor dem Einstoßen in die Kunststoffleiste 14 bzw. dem Umgießen mit dem Blei im Bereich der Bleileiste 13 werden die Enden der Gitterplatte 11 bezüglich ihrer Ebene durch ein geeignetes Werkzeug flachgedrückt, und zwar in der Ebene der Platte.

Nunmehr kann die negative Masse in die Gitterplatte 11 eingebracht werden, wobei zu beachten ist, daß gegenüber dem Üblichen die Steifigkeit der Masse etwas geringer ist, damit diese beim Aufbringen von einer Ebene der Gitterplatte her auch sicher auf deren Rückseite gelangt, und dort eine saubere Pastierung gewährleistet ist.

Bei Verwendung einer Stegbreite von 2 mm können so negative Elektrodenplatten durch Überpastieren mit einer Stärke von etwa 4,5 mm hergestellt werden.

Die Maschenlänge beträgt vorzugsweise 15 bis 30 mm. Hierdurch wird erreicht, daß der Strom in der negativen Masse maximal einen Weg von 5 mm zurücklegen muß. Der Mittelwert des zurückgelegten Weges beträgt etwa 2 mm.

Aufgrund der erfindungsgemäß verwendeten Maschengröße wird also einerseits ein nicht zu langer Stromweg erzielt, während andererseits nicht zuviele Stanzschritte erforderlich sind. Der Einsatz von Kupfer ist bei der erfindungsgemäßen Maschengröße ebenfalls begrenzt, was sowohl dem geringen Gewicht als auch den Herstellungskosten der Elektrodenplatte zugute kommt. Gleichwohl wird eine hohe Leitfähigkeit erzielt.

Die für das Kupferstreckmetall verwendete Blechstärke soll bei 0,6 mm liegen, was einerseits die Kosten reduziert und andererseits eine geringere Anzahl von Maschen bei gleicher Leitfähigkeit ermöglicht. Eine geringere Maschenanzahl hat auch den Vorteil, daß die Oberfläche der Gitterplatte nicht zu groß wird und somit die Verbleiungskosten in Grenzen gehalten werden. Eine größere Menge von Blei würde auch das Gewicht der Elektrodenplatte erhöhen.

**Patentansprüche**

1. Negative Elektrode für Bleiakkumulatoren in Form einer aus Kupferstreckmetall bestehenden rechteckigen Gitterplatte (11), die als Träger für die aktive Masse und zur Stromzu- bzw. -abführung dient, wobei die Streckrichtung des Streckmetalls parallel zu derjenigen Seite der rechteckigen Platte verläuft, an der die Anschlußfahne (12) angeordnet ist, und wobei an der betreffenden Seite eine sich über die gesamte Länge erstreckende Bleileiste (13) stromleitend befestigt ist, mit der die Anschlußfahne (12) ein Stück bildet, dadurch gekennzeichnet, daß der die Bleileiste (13) tragende Endbereich der Gitterplatte (11) in die Ebene der Gitterplatte (11) flachgedrückt und mit Blei umgossen ist.

2. Elektrode nach Anspruch 1, dadurch gekennzeichnet, daß die Unterkante (18) der Bleileiste (13) im wesentlichen durch die äußersten Kreuzungsstellen (15) der Gitterplatte verläuft.

3. Elektrode nach Anspruch 1 oder 2, dadurch gekennzeichnet, daß die Gitterplatte (11) an der Befestigungsseite geringfügig jenseits der Kreuzungsstellen (15) abgeschnitten ist, derart, daß für das Umgießen mit dem Blei der Bleileiste (13) kurze, über die Kreuzungsstellen hinausragende Verankerungsstege (16) vorliegen.

4. Elektrode nach einem der vorhergehenden Ansprüche, dadurch gekennzeichnet, daß auch diejenigen Felder (17) an der Befestigungsseite, die an der Unterkante (18) der Bleileiste (13) ihre größte Breite haben, mit Blei ausgegossen sind.

5. Elektrode nach einem der vorhergehenden Ansprüche, dadurch gekennzeichnet, daß der von der Bleileiste (13) abgewandte Endbereich der Gitterplatte (11) eine Abschlußleiste (14) aus säurefestem Kunststoff trägt und daß der vom Kunststoff umgebene Endbereich in die Ebene der Gitterplatte (11) flachgedrückt ist.

6. Elektrode nach Anspruch 5, dadurch gekennzeichnet, daß die Gitterplatte (11) am unteren Ende in Höhe der Kreuzungsstellen (15) abgeschnitten ist.

7. Verfahren zur Herstellung einer negativen Elektrode für Bleiakkumulatoren nach einem der vorhergehenden Ansprüche, bei welchem auf die Gitterplatte zunächst eine Blei-Zinn-Legierungsschicht und dann auf galvanischem Wege eine Bleischicht aufgebracht wird, wobei eine mindestens 8 % Sn aufweisende Blei-Zinn-Legierungsschicht nach Einhängen der Gitterplatte (11) in ein Reinigungs- und Spülbad auf galvanischem Wege auf die Gitterplatte (11) aufgebracht und anschließend ohne Zwischenspülung die Bleischicht aufgebracht wird.

8. Verfahren nach Anspruch 7, dadurch gekennzeichnet, daß die Blei-Zinn-Legierungsschicht 10 % Sn aufweist.

9. Verfahren nach Anspruch 7 oder 8 zur Herstellung einer negativen Elektrode nach Anspruch 6, dadurch gekennzeichnet, daß die Abschlußleiste (14) vor dem Aufbringen der Blei-Zinnschicht und der Bleischicht auf die Gitterplatte (11) angebracht wird.

10. Verfahren nach einem der Ansprüche 7 bis 9, dadurch gekennzeichnet, daß die Dicke der galvanisch aufgebrachten Blei-Zinnschicht mindestens 7 μm, vorzugsweise 10 μm beträgt.

11. Verfahren nach einem der Ansprüche 7 bis 10, dadurch gekennzeichnet, daß die Dicke der galvanisch aufgebrachten Bleischicht mindestens 20 μm, vorzugsweise etwa 40 μm beträgt.

**Claims**

1. Negative electrode for lead accumulators in the form of a rectangular grid plate (11) consisting of expanded copper metal, with the grid plate serving as a carrier for the active mass and for the supply and extraction of current, with the direction of stretching of the expanded metal extending parallel to that side of the rectangular plate at which the terminal lug (12) is arranged, and wherein a lead strip (13) with which the terminal lug (12) forms one piece is secured in current conducting manner to the relevant side and extends over the full length, characterized in that the end region of the grid plate (11) carrying the lead strip (13) is pressed flat into the plane of the grid plate (11) and is cast around with lead.

2. Electrode in accordance with claim 1, characterized in that the lower edge (18) of the lead strip (13) extends substantially through the outermost crossing points (15) of the grid plate.

3. Electrode in accordance with claim 1 or claim 2, characterized in that the grid plate (11) is cut-off at the attachment side fractionally beyond the crossing points (15) in such a way that short anchoring webs (16) which project beyond the crossing points are present for the casting around with the lead of the lead strip (13).

4. Electrode in accordance with one of the preceding claims, characterized in that the fields (17) at the securing side which have their greatest width at the lower edge (18) of the lead strip (13) are also cast full with lead.

5. Electrode in accordance with one of the preceding claims, characterized in that the end region of the grid plate (11) remote from the lead strip (13) carries a termination strip (14) of acid resistant synthetic material; and in that the end region surrounded by the synthetic material is pressed flat into the plane of the grid plate (11).

6. Electrode in accordance with claim 5, characterized in that the grid plate (11) is cut-off at the lower end at the level of the crossing points (15).

7. Method for the manufacture of a negative electrode for lead accumulators in accordance with one of the preceding claims in which there is applied to the grid plate first of all a lead-tin alloy layer and then by a galvanic route a lead layer, wherein, after suspending the grid plate (11) in a cleaning and rinsing bath, a lead-tin alloy layer having at least 8 % Sn is applied to the grid plate (11) by a galvanic route, and wherein the lead layer is subsequently applied without intermediate rinsing.

8. A method in accordance with claim 7, characterized in that the lead-tin alloy layer has 10 % Sn.

9. A method in accordance with claim 7 or claim 8 for the manufacture of a negative electrode in accordance with claim 6, characterized in that the termination strip (14) is applied to the grid plate (11) prior to the application of the lead-tin layer and of the lead layer.

10. A method in accordance with one of the claims 7 to 9, characterized in that the thickness of the galvanically applied lead-tin layer amounts to at least 7 μm, and preferably to 10 μm.

11. A method in accordance with one of the claims 7 to 10, characterized in that the thickness of the galvanically applied lead layer amounts to at least 20 μm, and preferably to approximately 40 μm.

**Revendications**

1. Electrode négative pour accumulateurs au plomb, ayant la forme d'une plaque à grille (11) rectangulaire, en cuivre déployé, qui sert de support à la masse active et à amener ou évacuer le courant, la direction d'extension du métal déployé étant parallèle à la face de la plaque rectangulaire sur laquelle est placée la barrette de raccordement (12), et une baguette de plomb (13) s'étendant sur toute la longueur étant fixée sur la face concernée, de manière à conduire le courant, et la barrette de raccordement (12) formant une seule pièce avec ladite baguette de plomb, caractérisée en ce que la zone terminale de la plaque à grille (11), portant la baguette de plomb (13), est pressée à plat dans le plan de la plaque à grille (11) et enrobée de plomb coulé.

2. Electrode selon la revendication 1, caractérisée en ce que le bord inférieur (18) de la baguette de plomb (13) passe a peu près par les points d'intersection (15) les plus extérieurs de la plaque à grille.

3. Electrode selon la revendication 1 ou 2, caractérisée en ce que la plaque à grille (11) est découpée sur la face de fixation, légèrement au-delà des points d'intersection (15), de telle sorte que pour l'enrobage avec le plomb de la baguette de plomb (13), on dispose de courtes âmes d'ancrage (16) dépassant les points d'intersection.

4. Electrode selon l'une des revendications précédentes, caractérisée en ce que les zones (17) situées sur la face de fixation et qui ont leur plus grande largeur sur le bord inférieur (18) de la barrette de plomb (13), sont aussi recouvertes de plomb coulé.

5. Electrode selon l'une des revendications précédentes, caractérisée en ce que la zone terminale de la plaque à grille (11), éloignée de la baguette de plomb (13), porte une baguette terminale (14) en matière plastique résistant aux acides, et en ce que la zone terminale entourée de la matière plastique est pressée à plat dans le plan de la plaque à grille (11).

6. Electrode selon la revendication 5, caractérisée en ce que la plaque à grille (11) est découpée à l'extrémité inférieure, à la hauteur des points d'intersection (15).

7. Procédé de fabrication d'une électrode négative pour accumulateurs au plomb selon l'une des revendications précédentes, dans lequel on applique sur la plaque à grille d'abord une couche d'alliage de plomb et d'étain, puis par galvanisation, une couche de plomb, une couche d'alliage de plomb et d'étain contenant au moins 8 % de Sn étant appliquée sur la plaque à grille (11), par galvanisation, après suspension de la plaque à grille (11) dans un bain de décapage et de rinçage, et la couche de plomb étant appliquée ensuite sans rinçage intermédiaire.

8. Procédé selon la revendication 7, caractérisé, en ce que la couche d'alliage de plomb et d'étain contient 10 % de Sn.

9. Procédé selon la revendication 7 ou 8 de fabrication d'une électrode négative selon la revendication 6, caractérisé en ce que la baguette terminale (14) est placée, avant application de la couche de plomb et d'étain et de la couche de plomb, sur la plaque à grille (11).

10. Procédé selon l'une des revendications 7 à 9, caractérisé en ce que l'épaisseur de la couche de plomb et d'étain appliquée par galvanisation est au moins égale à 7 μm, de préférence 10 μm.

11. Procédé selon l'une des revendications 7 à 10, caractérisé en ce que l'épaisseur de la couche de plomb appliquée par galvanisation est au moins égale à 20 μm, de préférence à environ 40 μm.